## Europäisches Patentamt
## European Patent Office
## Office européen des brevets

(19)

(11) Veröffentlichungsnummer: **0 122 395**
**B1**

(12) **EUROPÄISCHE PATENTSCHRIFT**

(45) Veröffentlichungstag der Patentschrifft:
21.03.90

(51) Int. Cl.⁵: **B 23 F   5/02**

(21) Anmeldenummer: 84101650.4

(22) Anmeldetag: 17.02.84

(54) Verfahren zum Steuern des Schleifhubes an einer Zahnflankenschleifmaschine.

(30) Priorität: 11.03.83 CH 1338/83

(43) Veröffentlichungstag der Anmeldung:
24.10.84 Patentblatt 84/43

(45) Bekanntmachung des Hinweises auf die Patenterteilung:
21.03.90 Patentblatt 90/12

(84) Bennante Vertragsstaaten:
CH DE FR GB IT LI NL SE

(56) Entgegenhaltungen:
DE-A-1 552 761
DE-A-2 842 365
DE-A-3 132 496
FR-A-2 073 700
FR-A-2 111 211
FR-A-2 223 123
FR-A-2 364 726
US-A-1 669 919

(73) Patentinhaber: Werkzeugmaschinenfabrik Oerlikon-Bührle AG
Birchstrasse 155
CH-8050 Zürich (CH)

(72) Erfinder: Bloch, Peter, Dr.
Sonnenbergstrasse 4
CH-8968 Mutschellen (CH)
Erfinder: Wydler, Robert, Dipl.-Ing.
Trottenstrasse 55
CH-8037 Zürich (CH)

## Beschreibung

Die Erfindung betrifft ein Verfahren zum Steuern des Schleifhubes in Abhängigkeit vom Wälzweg an einer im Teilwälzverfahren arbeitenden Zahnflankenschleifmaschine mit mindestens einer tellerförmig ausgebildeten und längs evolventenförmiger Zahnflanken hubweise hin- und herbewegbaren Schleifscheibe.

Bei der Bearbeitung evolventenförmiger Zahnflanken, insbesondere an Schrägverzahnungen, wird jeweils längs der Erzeugenden geschliffen, die über die Zahnbreite eine unterschiedliche Länge aufweisen; daher ist es sinnvoll, den Hub entsprechend der tatsächlich erforderlichen Länge zu steuern, damit nicht durch unnötig großen Überlauf der Schleifscheibe während großer Totzeiten keine Leistung am Werkstück erbracht wird.

Aus der DE-AS-2 050 946 ist es bekannt, mit Anschlagschienen abhängig vom Schrägungswinkel einer zu schleifenden Verzahnung ein parallelogrammförmiges Hubfeld zu begrenzen, das in grober Näherung den unterschiedlichen erforderlichen Hublängen entspricht. Dabei werden die Anschlagschienen zu Beginn des Schleifens eines Zahnrades oder einer Zahnradserie rein empirisch eingestellt; es ist nicht möglich, die einmal gewählte Einstellung während des Schleifens zu ändern, und die von der Zahnflankenform im Einzelfall gegebenen geometrischen Möglichkeiten werden nur unvollständig genutzt.

Auch hat man bisher für die Zwecke der Hubsteuerung den Schleifscheibendurchmesser während der gesamten Bearbeitung als konstant angesehen, obwohl zum Schleifen großer Zahnräder Schleifscheiben eingesetzt werden, die im neuen Zustand einen Durchmesser von 500 bis 700 mm haben und bis auf einen Durchmesser von etwa 250 bis 300 mm abgearbeitet werden. Dadurch, daß man die Hubsteuerung nicht an den aktuellen Schleifscheibendurchmesser angepaßt hat, sind noch erhebliche Teile der Maschinenhauptzeit verlorengegangen.

Es ist Aufgabe der Erfindung, die Steuerung des Schleifhubes in Abhängigkeit vom Wälzweg an einer Zahnradschleifmaschine derart weiterzubilden, daß Zeitverluste durch unnötigen Schleifscheibenüberlauf noch weiter vermindert werden.

Diese Aufgabe wird erfindungsgemäß mit den Merkmalen des Patentanspruchs 1 gelöst. Vorteilhafte Weiterbildungen sind Gegenstand der Unteransprüche.

Im folgenden wird die Erfindung mit ihren mathematischen Grundlagen anhand schematischer Zeichnungen erläutert, wobei eine Zahnradschleifmaschine mit zwei tellerförmigen Schleifscheiben vorausgesetzt wird, welche die zu bearbeitenden Zahnflanken mit ihrem Tellerrand schleifend berühren. Als Analogie wird zur mathematischen Behandlung die Flanke einer Werkzeug-Bezugszahnstange herangezogen, die jeweils die Ebene darstellt, in welcher dieser Tellerrand eine Zahnflanke des Werkstücks berührt.

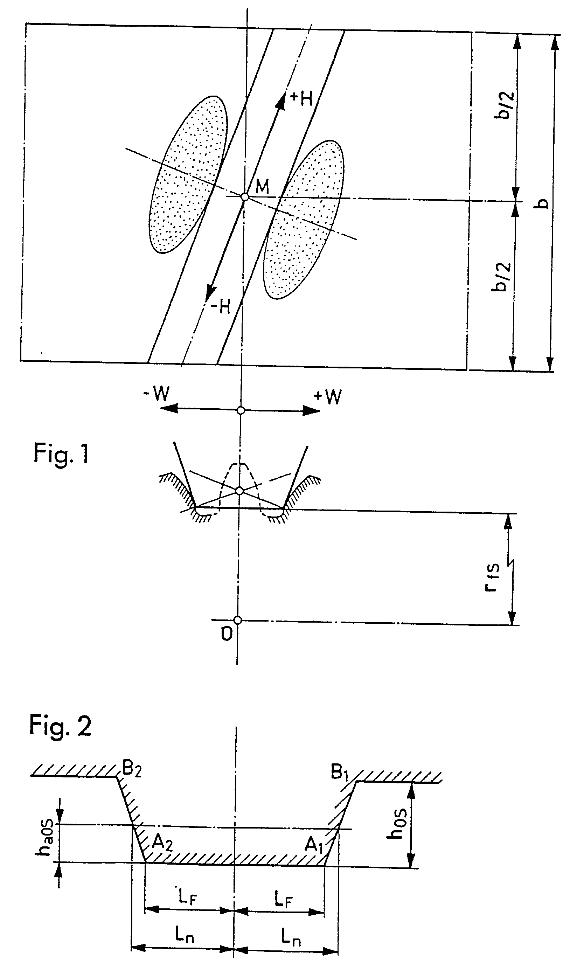

In Fig. 1 ist der Radmittelpunkt O des zu schleifenden Zahnrades, der Wälzpunkt W und der Schleifscheiben-Symmetriepunkt M dargestellt. Wenn Radmittelpunkt O, Wälzpunkt W und Schleifscheiben-Symmetriepunkt M miteinander fluchten, und sich M in der Mitte der Radbreite b befindet, liegt eine Symmetriestellung bezüglich Wälzweg ($\pm$ W) und Schleifhub ($\pm$ H) vor.

Diese Symmetriestellung wird für jedes zu schleifende Rad an der Zahnradschleifmaschine ermittelt, indem der Schleifscheiben-Symmetriepunkt M folgendermaßen in die Mitte der Radbreite b positioniert wird: In der entsprechenden Höheneinstellung werden die Schleifscheiben von einer Seite her seitlich in das zu bearbeitende Zahnrad ein- und auf der anderen Seite wieder herausgewälzt. Beim ersten Touchieren der einen Flanke durch die eine Schleifscheibe wird der Wälzweg notiert und ebenso beim letzten Touchieren der anderen Flanke durch die andere Schleifscheibe. Der Mittelwert der beiden Notierungen stellt die Symmetriestellung bezüglich des Wälzweges W dar.

Fig. 2 zeigt einen Ausschnitt der Bezugszahnstange im Normalschnitt, welche die Grundlage für die Berechnung der Hubgrenzen in Funktion des Wälzweges W darstellt. Die Verbindung zwischen zwei Zahnkopfpunkten $A_1$ und $A_2$ der Bezugszahnstange wird als Kopflinie bezeichnet, und diese wird durch den Schleif-Fußkreis (Durchmesser $d_{fS}$) berührt. Diese beiden Zahnkopfpunkte $A_1$ und $A_2$ begrenzen zusammen mit je einem Zahnkopfpunkt $B_1$ und $B_2$ je eine Radflanke. Der Schleif-Fußkreisdurchmesser $d_{fS}$ ist eine Eingabegröße, die so gewählt wird, daß beim Schleifen das aktive Flankenprofil mit einem gewissen Sicherheitszuschlag überstrichen wird; die Bestimmung dieses Durchmessers wird noch erläutert.

Die Kopfbreite 2 $L_F$ der Werkzeug-Bezugszahnstange läßt sich ebenfalls aus den Erzeugungsdaten, nämlich aus den Zahnradbestimmungsgrößen, einschließlich der Ausführungszahnweite $AW_k$ und des bereits bestimmten Schleif-Fußkreisdurchmessers $d_{fS}$ bestimmen.

Eingabegrößen für die Berechnung der Hubgrenzen bzw. der Stellung der Schleifscheiben sind:

| | |
|---|---|
| Modul (Normalmodul) | m |
| Eingriffswinkel | $\alpha$ |
| Eingriffswinkel Betrachtung im Stirnschnitt | $\alpha_t$ |
| Zähnezahl | z |
| Schrägungswinkel | $\beta$ |
| Kopfkreisdurchmesser | $d_a$ |
| Grundkreisdurchmesser | $d_b$ |
| Zahnbreite | b |
| Schleif-Fußkreisdurchmesser | $d_{fS}$ |
| Teilkreisdurchmesser | d |
| Zahnkopfhöhenfaktor im Bezugsprofil auf Modul 1 | $h_{aP}$ |
| Zahnfußhöhenfaktor im Bezugsprofil auf Modul 1 | $h_{fS}$ |

| | |
|---|---|
| Profilverschiebungsfaktor | $x$ |
| Zahnhöhe der Werkzeug-Bezugszahnstange | $h_S$ |

Ein Parameter, der als Feedback von der Maschine geliefert wird, ist der Halbmesser des Schleifscheibenrandes $R_S$.

Die nachfolgenden Hilfsgrößen entstammen im wesentlichen der bekannten Zahnradgeometrie und sind beispielsweise beschrieben in dem von der Anmelderin herausgegebenen Maag-Taschenbuch, Zürich 1963. Die hier verwendeten Begriffe sind in einer Anlage zusammengestellt.

$$d = \frac{z \cdot m}{\cos\beta}$$

$$\tan\alpha_t = \frac{\tan\alpha}{\cos\beta}$$

$$d_b = d \cdot \cos\alpha_t$$

$$\cos\alpha_a = \frac{d_b}{d_a}$$

$$\tan\gamma = \sin\alpha \cdot \tan\beta$$

$$L_F = 0{,}5\,[\,(k+1) \cdot \pi \cdot m - \frac{AW_k}{\cos\alpha} + z \cdot m \cdot inv\alpha_t - (d - d_{fs})\tan\alpha]$$

$$h_S = 0{,}5[d_b\,(\tan\alpha_a - \tan\alpha_t)\sin\alpha_t + d - d_{fs}]$$

$$\xi_0 = L_F \cdot \tan\beta$$

$$\eta_0 = (\frac{d - d_{fs}}{2} - L_F \cdot \tan\alpha)\,\cos\alpha$$

$$Q_{20} = 0{,}5\,\frac{b}{\cos\beta} - \xi_0 + h_S\,\frac{\tan\gamma}{\cos\alpha}$$

$$Q_{21} = 0{,}5\,\frac{b}{\cos\beta} - \xi_0 - h_S\,\frac{\tan\gamma}{\cos\alpha}$$

$$Q_{22} = \frac{\dfrac{h_S}{\cos\alpha} - \eta_0}{\tan\gamma}$$

$$Q_{23} = \sqrt{R_S^2 - (R_s - \frac{h_S}{\cos\alpha})^2}$$

$$Q_{24} = (Q_{21} - Q_{22}) \cdot \sin\gamma$$

$$Q_{25} = Q_{20} \cdot \sin\gamma + (\frac{h_S}{\cos\alpha} - \eta_0)\,\cos\gamma$$

Bei der Bestimmung der Abhängigkeit von Schleifhub und Wälzweg spielt die zu bearbeitende Zahnbreite eines Rades eine ausschlaggebende Rolle. Man kann daher näherungsweise davon ausgehen, daß bei vorausgesetzter Links- bzw.

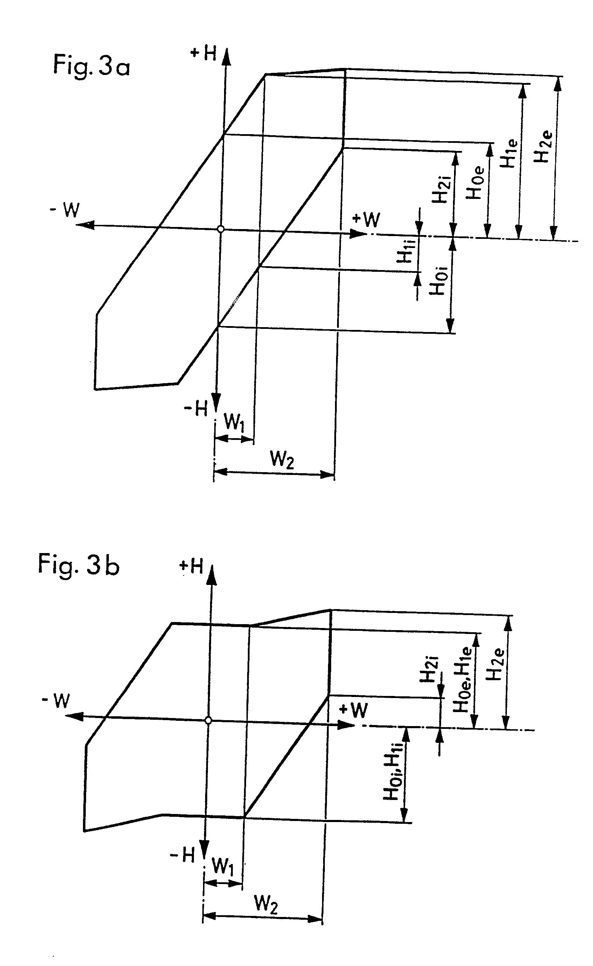

Rechtsgängigkeit eines zu bearbeitenden Rades zwei Simulationsdiagramm-Typen A und B, gemäß Fig. 3a und 3b entstehen. Die Form dieser Diagramm-Typen wird nur in den Eckpunkten exakt bestimmt. Die diese Eckpunkte verbindenden Linien werden der Einfachheit halber als Verbindungsgeraden gezeichnet. In der Praxis müssen für diese Verbindungslinien die jeweils erforderlichen Näherungsfunktionen (Parabel-, Hyperbelfunktion) ermittelt und an die tatsächlichen Wälzweg-Hub-Diagramme angepaßt werden.

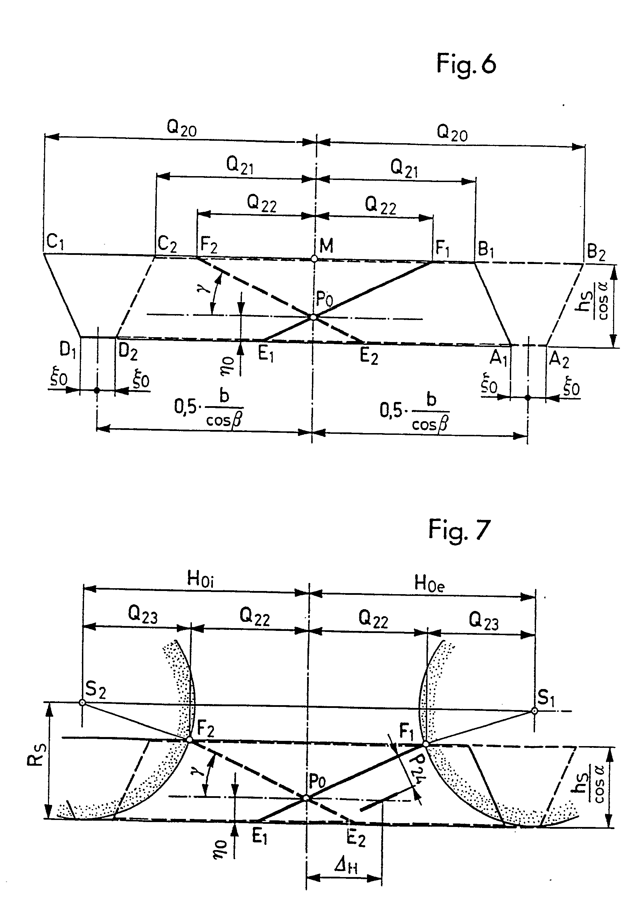

Gemäß Fig. 6 ist dann, wenn

$Q_{21} > Q_{22}$     Diagramm-Typ A (Fig. 3a)

und wenn

$Q_{22} \geq Q_{21}$     Diagramm-Typ B (Fig. 3b)

relevant.

Die damit verbundene kritische Zahnbreite b' wird wie folgt ermittelt:

$$b' = 2 \cos\beta \left[ \frac{\dfrac{h_s}{\cos\alpha} - \eta_0}{\tan\gamma} + \xi_0 + h_s \frac{\tan\gamma}{\cos\alpha} \right]$$

Die Diagramme sind bezüglich der Mittelstellung, d.h. bezüglich des Berechnungs-Nullpunktes für den Schleifhub H und den Wälzweg W punktsymmetrisch. H und W erscheinen in der Berechnung mit Vorzeichen bezüglich dieses Berechnungs-Nullpunktes. Die Analogie zwischen einem links- und einem rechtgängigen Rad ist die Spiegelsymmetrie.

Für die Berechnung genügt es - was nachfolgend noch bewiesen wird - jeweils pro Seite drei Wertepaare für den Schleifhub H und den Wälzweg W zu berechnen, das Diagramm kann dann jeweils für die andere Seite symmetrisch ergänzt werden.

Die Werte selbst sind für die Mittelstellung, für den Knickpunkt und die Extremwerte zu berechnen, was nachfolgend noch untersucht wird. Schleifhub- und Wälzweg-Angaben ohne Vorzeichen lassen sich jeweils durch Superposition eines konstanten Wertes erhalten.

Aufgrund der durch die Hilfsgrößen, wie sie vorstehend definiert wurden, festgelegten Parameter lassen sich für die Wertepaare entsprechend den Diagrammen A und B folgende Beziehungen aufstellen:

**Diagramm-Typ A**

$W_0 = 0$

$H_{0I} = - (Q_{22} + Q_{23}).$
$H_{0e} = + (Q_{22} + Q_{23})$

$W_1 = \dfrac{Q_{24}}{\sin\alpha_t}$

$H_{1I} = \dfrac{Q_{24}}{\sin\gamma} - (Q_{22} + Q_{23})$

$H_{1e} = \dfrac{Q_{24}}{\sin\gamma} + (Q_{22} + Q_{23})$

$W_2 = \dfrac{Q_{25}}{\sin\alpha_t}$

$H_{2I} = Q_{20} - Q_{23}$

$H_{2e} = Q_{20} + Q_{23}$

**Diagramm-Typ B**

$W_0 = 0$

$H_{0I} = - (Q_{21} + Q_{23})$
$H_{0e} = + (Q_{21} + Q_{23})$

$W_1 = (Q_{22} - Q_{21}) \dfrac{\sin\gamma}{\sin\alpha_t}$

$H_{1I} = - (Q_{21} + Q_{23})$

$H_{1e} = + (Q_{21} + Q_{23})$

$$W_2 = \frac{Q_{25}}{\sin\alpha_t} \qquad\qquad H_{2i} = Q_{20} - Q_{23}$$

$$H_{2e} = Q_{20} + Q_{23}$$

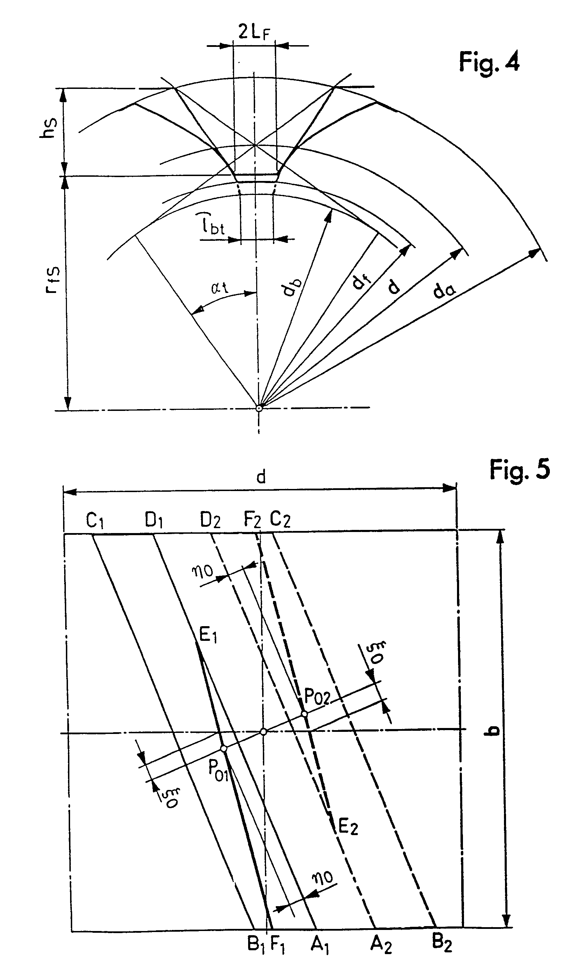

In Fig. 4 ist eine von der schematischen Darstellung der Fig. 2 ausgehende praxisgerechte Zahnlücke skizziert. Dabei hat man sich vorzustellen, daß die Schleifscheiben die Sehnen $A_1B_1$ und $A_2B_2$ bearbeiten. Der Abstand $A_1A_2$ wird an der Schleifmaschine gemäß vorberechnetem Wert eingestellt.

Nachstehend ist dessen rechnerische Bestimmung, ausgehend von der Ausführungs-Zahnweite $AW_k$ und dem Schleif-Fußkreisdurchmesser $d_{fS}$, gezeigt:

$$l_{bn} = 2P_{bn} - [AW_k - (k-1) \cdot P_{bn}] = (k+1)\, P_{bn} - AW_k$$

$$l_{bt} = \frac{l_{bn}}{\cos\beta_b}$$

$$l_t = d\left(\frac{l_{bt}}{d_b} + \mathrm{inv}\alpha_t\right)$$

$$l_n = l_t \cdot \cos\beta = d \cdot \cos\beta \left(\frac{l_{bt}}{d_b} + \mathrm{inv}\alpha_t\right)$$

$$l_n = \frac{z \cdot m}{\cos\beta} \cdot \cos\beta \left(\frac{l_{bt}}{d_b} + \mathrm{inv}\alpha_t\right) = z \cdot m \left(\frac{l_{bt}}{d_b} + \mathrm{inv}\alpha_t\right)$$

$$= z \cdot m \left[\frac{(k+1)P_{bn} - AW_k}{\cos\beta_b \cdot d_b} + \mathrm{inv}\alpha_t\right]$$

$$= z \cdot m \frac{(k+1)\cdot \pi \cdot m \cdot \cos\alpha - AW_k}{z \cdot m \cdot \cos\alpha} + z \cdot m \cdot \mathrm{inv}\alpha_t$$

$$= \pi \cdot m\,(K+1) - \frac{AW_k}{\cos\alpha} + z \cdot m \cdot \mathrm{inv}\alpha_t$$

$$2L_F = l_n - \frac{d - d_{fS}}{2} \cdot 2 \cdot \tan\alpha$$

$$L_F = 0{,}5 \left[(k+1) \cdot \pi \cdot m - \frac{AW_k}{\cos\alpha} + z \cdot m \cdot \mathrm{inv}\alpha_t - (d - d_{fS})\tan\alpha\right.$$

In Fig. 5 ist die graphische Bestimmung der Berührungslinien der Werkzeug-Bezugszahnstangenflanke mit der Radflanke gezeigt. Dabei sind die Durchstoßpunkte der Normalen auf die Flanken, ausgehend vom Wälzpunkt der Symmetriestellung, mit $P_{01}$ und $P_{02}$ bezeichnet.

Ferner umfassen die einzelnen Umrandungen:

| | |
|---|---|
| $A_1\,B_1\,C_1\,D_1$ | Zahnstangenflanke 1 |
| $A_2\,B_2\,C_2\,D_2$ | Zahnstangenflanke 2 |
| $E_1\,F_1$ | Berührungslinie der Flanke 1 |
| $E_2\,F_2$ | Berührungslinie der Flanke 2 |
| $A_1\,D_1$ | Fußlinie der Flanke 1 |
| $A_2\,D_2$ | Fußlinie der Flanke 2 |

In Fig. 6 sind die beiden Flanken übereinandergelegt dargestellt, so daß die beiden Punkte $P_{01}$ und $P_{02}$ in $P_0$ zur Deckung kommen.

Beim Wälzen verschiebt sich die Berührungslinie $E_1$ $F_1$ parallel zu sich selbst nach oben, und die Berührungslinie $E_2$ $F_2$ parallel zu sich selbst nach unten bzw. umgekehrt je nach Wälzrichtung, d.h. der Kreuzungspunkt der beiden Berührungslinien in Fig. 6 bewegt sich horizontal auf der Linie durch $P_0$ nach links oder rechts je nach Wälzrichtung.

Da die Schleifhub- und Wälzverhältnisse von der Mittelstellung aus bezüglich des Schleifhubes H nach oben und unten und bezüglich des Wälzweges W nach links und rechts, wie erwähnt, symmetrisch sind, reicht die Berechnung nach einer Seite hin aus. Das bzw. die Diagramme sind somit punktsymmetrisch bezüglich des Berechnungs-Bezugssystems.

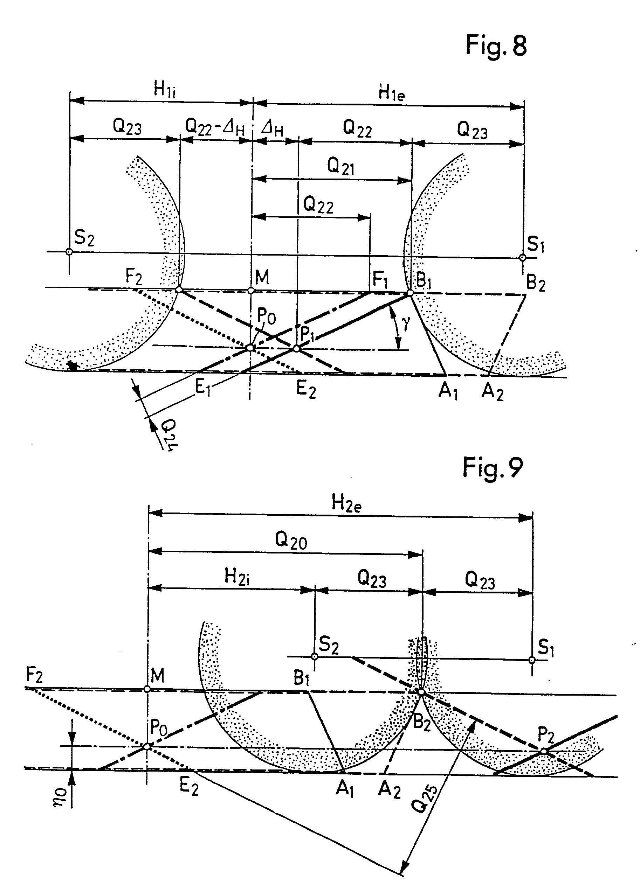

Beim Diagramm-Typ A lassen sich damit die in Fig. 7, 8 und 9 zusammengefaßten Wertepaare ermitteln:

Fig. 7 beschreibt den Fall, in welchem der Wälzweg W = Null ist und eine unbegrenzt breite Verzahnung vorliegt. In dieser sogenannten Mittelstellung ergibt sich für die Hubgrenzen folgende Bedingung:

$H_{0i} = - (Q_{22} + Q_{23})$
$H_{0e} = + (Q_{22} + Q_{23})$

Fig. 8 zeigt den Fall, in welchem eine Wälzstellung erreicht wird, die zu einer Knickstelle im Schleifhub-Wälzweg-Simulations-Diagramm führt, nämlich dann, wenn die Berührungslinie $E_1$ $F_1$ durch den Punkt $B_1$ geht. Für diesen Wälzweg $W_1$ kann die folgende Hubbegrenzung berechnet werden:

$$Q_{24} = (Q_{21} - Q_{22}) \cdot \sin\gamma$$

$$W_1 = \frac{Q_{24}}{\sin\alpha_t}$$

$$\Delta H = \frac{Q_{24}}{\sin\gamma}$$

$$H_{1i} = \Delta H - (Q_{22} + Q_{23})$$

$$H_{1e} = \Delta H + (Q_{22} + Q_{23})$$

Fig. 9 zeigt den Fall, daß die Wälzstellung erreicht wird, die signifikant ist für die Extremwerte des Schleifhubes. Dabei geht die Berührungslinie $E_2$ $F_2$ durch den Punkt $B_2$, und die Wälzstellung selber wird durch $W_2$ markiert. Die Schleifscheibe tastet den Punkt $B_2$ zweimal an, nämlich einmal in ihrer Stellung bei $S_1$ und einmal in ihrer Stellung bei $S_2$. Bei diesem Wälzweg ist die Berührungslinie $E_1$ $F_1$ bereits weit außerhalb der zugehörigen Flanke.

Bezüglich der Hubbegrenzung ergeben sich folgende Werte:

$$Q_{25} = Q_{20} \cdot \sin\gamma + \left(\frac{h_s}{\cos\alpha} - \eta_0\right) \cos\gamma$$

$$W_2 = \frac{Q_{25}}{\sin\alpha_t}$$

$$H_{2i} = Q_{20} - Q_{23}$$
$$H_{2e} = Q_{20} + Q_{23}$$

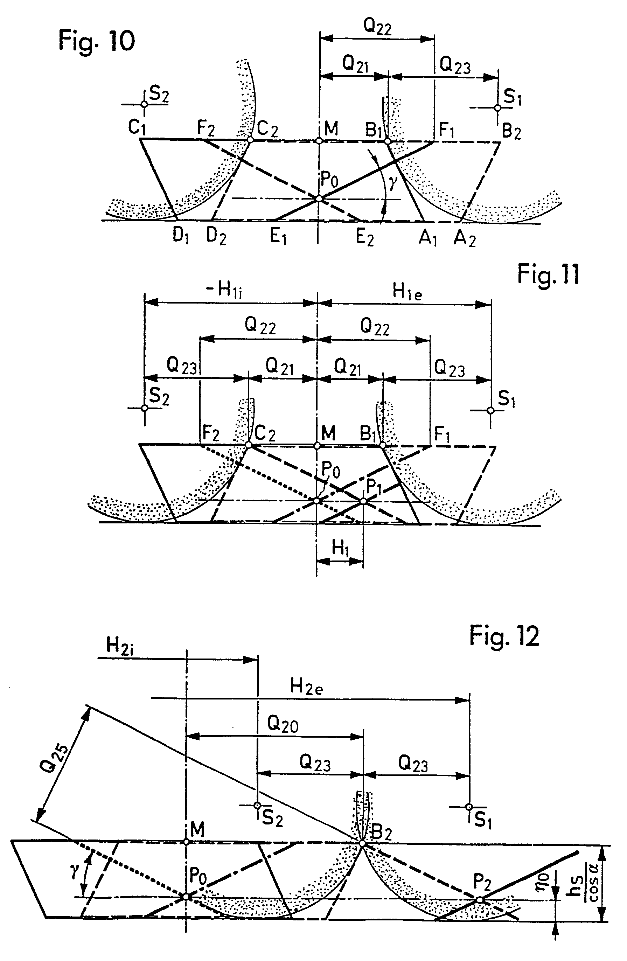

Analog zu den Berechnungen für den Diagramm-Typ A lassen sich die Überlegungen für den Diagramm-Typ B darstellen. Dabei lassen sich die in den Figuren 10, 11 und 12 graphisch ermittelten Hubbegrenzungen berechnen:

Gemäß Fig. 10 für die Wälzstellung in $P_0$ (Mittelstellung):

$H_{0i} = - (Q_{21} + Q_{23})$
$H_{0e} = + (Q_{21} + Q_{23})$

Gemäß Fig. 11 für die Wälzstellung in Punkt $P_1$, die dann erreicht ist, wenn die Berührungslinie $E_2$ $F_2$ durch den Punkt $C_2$ geht.

$$W_1 = H_1 \frac{\sin\gamma}{\sin\alpha_t} = (Q_{22} - Q_{21}) \frac{\sin\gamma}{\sin\alpha_t}$$

Damit kann die Verzahnung im Wälzpunkt $P_1$ mit den gleichen Schleifhubwerten wie im Punkt $P_0$ geschliffen werden.

$H_{1i} = - (Q_{21} + Q_{23})$

$H_{1e} = + (Q_{21} + Q_{23})$

Gemäß Fig. 12 ist die Wälzstellung in Punkt $P_2$, dann erreicht, wenn die Berührungslinie $E_2 F_2$ durch den Punkt $B_2$ geht.

$$Q_{25} = Q_{20} \cdot \sin\gamma + (\frac{h_s}{\cos\alpha} - \eta_0) \cos\gamma$$

$$W_2 = \frac{Q_{25}}{\sin\alpha_t}$$

$H_{2i} = Q_{20} - Q_{23}$

$H_{2e} = Q_{20} + Q_{23}$

Zum Messen des Schleifscheibenhalbmessers $R_S$ läßt sich beispielsweise die aus der DE-3 132 496 A1 bekannte Vorrichtung zum Abrichten und Nachstellen einer Schleifscheibe an einer Zahnflankenschleifmaschine verwenden. Dort ist die bzw. jede Schleifscheibe an einem Schleifsupport gelagert, der mittels eines Schrittmotors entsprechend der Abnutzung der Schleifscheibe nachstellbar ist. Der Schrittmotor wird von einer Steuereinheit gesteuert, und diese erhält Impulse von einem die Mantelfläche der Schleifscheibe abtastenden Taster. Die vom Taster abgegebenen Impulse lassen sich, ausgehend von einem definierten Ausgangszustand, dazu verwenden, den tatsächlich wirksamen Schleifscheibenhalbmesser $R_S$ jederzeit zu berechnen.

Der nach dem erfindungsgemäßen Verfahren entsprechend dem Schleifscheibenhalbmesser $R_S$ gesteuerte Schleifhub H wird je nach der konstruktiv bedingt erreichbaren Genauigkeit um einen konstanten Sicherheitsüberlauf von einigen Millimetern vergrößert, damit die Zahnflanken unter allen Umständen vollständig geschliffen werden. Ein solcher Sicherheitsüberlauf ändert jedoch nichts an dem Grundsatz, daß der Schleifhub stets so klein gehalten wird, wie dies unter den gegebenen Bedingungen möglich ist, zu denen als nicht vorausberechenbare Größe der sich durch Abnutzung und Abrichten vermindernde Schleifscheibenhalbmesser $R_S$ gehört.

Die erfindungsgemäße Minimierung des Schleifhubes H ermöglicht bedeutende Zeitersparnisse, die sich noch vermehren lassen, wenn man die Wälzgeschwindigkeit derart steuert, daß sie - bei im wesentlichen konstanter Geschwindigkeit der Schleifhübe - mit abnehmendem Schleifhub zunimmt und umgekehrt.

**Patentansprüche**

1. Verfahren zum Steuern des Schleifhubes (H) an einer im Teilwälzverfahren arbeitenden Zahnflankenschleifmaschine mit mindestens einer tellerförmig ausgebildeten und hubweise längs der Erzeugenden evolventenförmiger Zahnflanken hin- und herbewegbaren Schleifscheibe, wobei der Schleifhub (H) jeweils um einen Zuschlag grösser als die sich in Abhängigkeit von der Wälzstellung ändernde Länge der Erzeugenden ist, dadurch *gekennzeichnet*, dass der wirksame Halbmesser ($R_S$) mindestens einer Schleifscheibe bei der Bearbeitung jeder Zahnflanke mindestens einmal gemessen wird und der Schleifhub (H) entsprechend der allmählichen Abnahme des gemessenen Halbmessers ($R_S$) vermindert wird.

2. Verfahren nach Anspruch 1, dadurch *gekennzeichnet*, dass die Messung des Halbmessers ($R_S$) und Anpassung des Schleifhubes (H) beim Schruppen 100 bis 10 mal und beim Schlichten 10 bis 1 mal je Zahnflanke wiederholt wird.

3. Verfahren nach Anspruch 1 oder 2 zum Steuern des Schleifhubes (H) in Abhängigkeit vom Wälzweg (W) beim Schleifen von Schrägverzahnungen, dadurch *gekennzeichnet*, daß die Hubgrenzen nach folgenden Rechenvorschriften festgelegt werden:

Wenn $Q_{21}$ größer als $Q_{22}$ ist:

$W_0 = O$

$H_{0i} = - (Q_{22} + Q_{23})$.

$H_{0e} = + (Q_{22} + Q_{23})$

$$W_1 = \frac{Q_{24}}{\sin \alpha_t}$$

$$H_{1i} = \frac{Q_{24}}{\sin\gamma} - (Q_{22} + Q_{23})$$

$$H_{1e} = \frac{Q_{24}}{\sin\gamma} + (Q_{22} + Q_{23})$$

$$W_2 = \frac{Q_{25}}{\sin\alpha_t}$$

$$H_{2i} = Q_{20} - Q_{23}$$

$$H_{2e} = Q_{20} + Q_{23}$$

Wenn $Q_{21}$ kleiner oder gleich $Q_{22}$ ist:

$$W_0 = O$$

$$H_{0i} = - (Q_{21} + Q_{23})$$
$$H_{0e} = + (Q_{21} + Q_{23})$$

$$W_1 = (Q_{22} - Q_{21}) \, \frac{\sin\gamma}{\sin\alpha_t}$$

$$H_{1i} = - (Q_{21} + Q_{23})$$

$$H_{1e} = + (Q_{21} + Q_{23})$$

$$W_2 = \frac{Q_{25}}{\sin\alpha_t}$$

$$H_{2i} = Q_{20} - Q_{23}$$

$$H_{2e} = Q_{20} + Q_{23}$$

wobei in beiden Fällen

$$Q_{20} = 0,5 \, \frac{b}{\cos\beta} + \xi_0 + h_S \, \frac{\tan\gamma}{\cos\alpha}$$

$$Q_{21} = 0,5 \, \frac{b}{\cos\beta} - \xi_0 - h_S \, \frac{\tan\gamma}{\cos\alpha}$$

$$Q_{22} = \frac{\dfrac{h_S}{\cos\alpha} - \eta_0}{\tan\gamma}$$

$$Q_{23} = \sqrt{R_S^2 - \left(R_s - \frac{h_S}{\cos\alpha}\right)^2}$$

$$Q_{24} = (Q_{21} - Q_{22}) \cdot \sin\gamma$$

$$Q_{25} = Q_{20} \cdot \sin\gamma + \left(\frac{h_S}{\cos\alpha} - \eta_0\right) \cos\gamma$$

$$\xi_0 = L_F \cdot \tan\beta$$

$$\eta_0 = \left(\frac{d - d_{fs}}{2} - L_F \cdot \tan\alpha\right) \cos\alpha$$

$$L_F = 0,5 \, [(k + 1) \cdot \pi \cdot m - \frac{AW_k}{\cos\alpha} + z \cdot m \cdot \mathrm{inv}\alpha_t - (d - d_{fs}) \tan\alpha]$$

$$h_S = 0,5 \, [d_b \, (\tan\alpha_a - \tan\alpha_t) \sin\alpha_t + d - d_{fs}]$$

$$\tan\gamma = \sin\alpha \cdot \tan\beta$$

| | |
|---|---|
| Modul (Normalmodul) | m |
| Eingriffswinkel | $\alpha$ |
| Eingriffswinkel Betrachtung im Stirnschnitt | $\alpha_t$ |
| Zähnezahl | z |
| Schrägungswinkel | $\beta$ |
| Kopfkreisdurchmesser | $d_a$ |
| Grundkreisdurchmesser | $d_b$ |
| Zahnbreite | b |
| Schleif-Fußkreisdurchmesser | $d_{fs}$ |
| Teilkreisdurchmesser | d |
| Zahnkopfhöhenfaktor im Bezugsprofil auf Modul 1 | $h_{aP}$ |
| Zahnfußhöhenfaktor im Bezugsprofil auf Modul 1 | $h_{fS}$ |
| Profilverschiebungsfaktor | x |
| Zahnhöhe der Werkzeug-Bezugszahnstange | $h_S$ |

| | |
|---|---|
| Ein Parameter, der als Feedback von der Maschine geliefert wird, ist der | |
| Halbmesser des Schleifscheibenrandes | $R_S$ |
| Wälzweg | W |
| Kopfbreite | $L_F$ |
| Ausführungszahnweite | $AW_k$ |

**Claims**

1. A method of controlling the grinding stroke (H) on a tooth-flank grinding machine working by the generating method with indexing control, having at least one disclike grinding wheel which is reciprocable in strokes along the generatrices of involute-shaped tooth flanks, the grinding stroke (H) being greater, by an extra amount in each case, than the length of the generatrix, which varies in function of the generating position, characterised in that the effective radius ($R_S$) of said at least one grinding wheel being measured at least once during the machining of each tooth flank and the grinding stroke (H) being reduced according to the gradual decrease in the measured radius ($R_S$).

2. A method as claimed in Claim 1, wherein the measurement of the radius ($R_S$) and the adaption of the grinding stroke (H) are repeated 100 to 10 times during the rough-grinding and 10 to 1 times for each tooth flank during the finish-grinding.

3. A method as claimed in Claim 1 or 2 for controlling the grinding stroke (H) depending on the generating path (W) during the grinding of helical teeth, wherein the stroke limits are determined according to the following calculation rules:

If $Q_{21}$ is greater than $Q_{22}$

$$W_0 = O \qquad\qquad H_{0i} = -(Q_{22} + Q_{23}).$$
$$H_{0e} = +(Q_{22} + Q_{23})$$

$$W_1 = \frac{Q_{24}}{\sin\alpha_t} \qquad\qquad H_{1i} = \frac{Q_{24}}{\sin\gamma} - (Q_{22} + Q_{23})$$

$$H_{1e} = \frac{Q_{24}}{\sin\gamma} + (Q_{22} + Q_{23})$$

$$W_2 = \frac{Q_{25}}{\sin\alpha_t} \qquad\qquad H_{2I} = Q_{20} - Q_{23}$$

$$H_{2e} = Q_{20} + Q_{23}$$

If $Q_{21}$ is smaller than or equal to $Q_{22}$

$$W_0 = O \qquad\qquad H_{0i} = -(Q_{21} + Q_{23})$$
$$H_{0e} = +(Q_{21} + Q_{23})$$

$$W_1 = (Q_{22} - Q_{21})\frac{\sin\gamma}{\sin\alpha_t} \qquad\qquad H_{1i} = -(Q_{21} + Q_{23})$$

$$H_{1e} = +(Q_{21} + Q_{23})$$

9

$$W_2 = \frac{Q_{25}}{\sin\alpha_t} \qquad\qquad H_{2i} = Q_{20} - Q_{23}$$

$$H_{2e} = Q_{20} + Q_{23}$$

wherein in both cases

$$Q_{20} = 0,5 \cdot \frac{b}{\cos\beta} + \xi_0 + h_S \frac{\tan\gamma}{\cos\alpha}$$

$$Q_{21} = 0,5 \frac{b}{\cos\beta} - \xi_0 - h_S \frac{\tan\gamma}{\cos\alpha}$$

$$Q_{22} = \frac{\dfrac{h_S}{\cos\alpha} - \eta_0}{\tan\gamma}$$

$$Q_{23} = \sqrt{R_S^2 - (R_s - \frac{h_S}{\cos\alpha})^2}$$

$$Q_{24} = (Q_{21} - Q_{22}) \cdot \sin\gamma$$

$$Q_{25} = Q_{20} \cdot \sin\gamma + (\frac{h_S}{\cos\alpha} - \eta_0) \cos\gamma$$

$$\xi_0 = L_F \cdot \tan\beta$$

$$\eta_0 = (\frac{d - d_{fs}}{2} - L_F \cdot \tan\alpha) \cos\alpha$$

$$L_F = 0,5 [(k + 1) \cdot \pi \cdot m - \frac{AW_k}{\cos\alpha} + z \cdot m \cdot \mathrm{inv}\upsilon\alpha_t - (d - d_{fs}) \tan\alpha]$$

$$h_S = 0,5 [d_b (\tan\alpha_a - \tan\alpha_t) \sin\alpha_t + d - d_{fs}]$$

$\tan\gamma = \sin\alpha \cdot \tan\beta$

| | |
|---|---|
| Modul (normal plane pitch) | m |
| Pressure angle | $\alpha$ |
| Pressure angle in end section | $\alpha_t$ |
| Number of teeth | z |
| Helix angle | $\beta$ |
| Diameter of addendum circle | $d_a$ |
| Diameter of base circle | $d_b$ |
| Tooth width | b |
| Grinding root-circle diameter | $d_{fs}$ |
| Diameter of pitch circle | d |
| Addendum factor in the reference profile on module 1 | $h_{aP}$ |
| Dedendum factor in the reference profile on module 1. | $h_{fS}$ |
| Profile displacement factor | x |
| Depth of tooth of the tool reference rack | $h_S$ |
| A parameter, supplied as feedback from the machine is the radius of the edge of the grinding wheel | $R_S$ |
| Generating path | W |
| Top width | $L_F$ |
| Model tooth width | $AW_k$ |

## Revendications

1. Procédé pour commander la course d'avance (H) de la meule ou des meules d'une machine à rectifier les flancs d'engrenages travaillant dans le procédé de génération avec division, qui comprend au moins une meule en forme d'assiette qui se déplace alternativement dans son mouvement d'avance le long des génératrices de flancs de dents en développement de cercle, la course d'avance (H) étant supérieure d'une certaine marge à la longueur des génératrices qui varie en fonction de la position de génération ce procédé étant caractérisé en ce que le rayon effectif ($R_S$) d'au moins une meule est mesuré au moins une fois pendant le travail de chaque flanc de dent et que la course d'avance (H) de la meule est diminuée en fonction de la décroissance progressive du rayon ($R_S$) mesuré.

2. Procédé selon la revendication 1, caractérisé en ce que la mesure du rayon ($R_S$) et l'adaptation de la course d'avance (H) de la meule sont répétées de 100 à 10 fois par flanc de dent au cours de l'ébauchage et de 10 à 1 fois par flanc de dent au cours de la finition.

3. Procédé selon l'une des revendications 1 et 2, appliqué à la commande de la course d'avance (H) de la meule ou des meules en fonction de la course (W) du mouvement de génération dans le cas de rectification de dentures obliques, caractérisé en ce que les limites de la course d'avance sont fixées selon les règles de calcul suivantes:

Lorsque $Q_{21}$ est plus grand que $Q_{22}$:

$$W_0 = O \qquad\qquad H_{0i} = -(Q_{22} + Q_{23}).$$
$$H_{0e} = +(Q_{22} + Q_{23})$$

$$W_1 = \frac{Q_{24}}{\sin\alpha_t} \qquad\qquad H_{1i} = \frac{Q_{24}}{\sin\gamma} - (Q_{22} + Q_{23})$$

$$H_{1e} = \frac{Q_{24}}{\sin\gamma} + (Q_{22} + Q_{23})$$

$$W_2 = \frac{Q_{25}}{\sin\alpha_t} \qquad\qquad H_{2i} = Q_{20} - Q_{23}$$

$$H_{2e} = Q_{20} + Q_{23}$$

Lorsque $Q_{21}$ est inférieur ou égal à $Q_{22}$,

$$W_0 = O \qquad\qquad H_{0i} = -(Q_{21} + Q_{23})$$
$$H_{0e} = +(Q_{21} + Q_{23})$$

$$W_1 = (Q_{22} - Q_{21})\, \frac{\sin\gamma}{\sin\alpha_t} \qquad\qquad H_{1i} = -(Q_{21} + Q_{23})$$

$$H_{1e} = +(Q_{21} + Q_{23})$$

$$W_2 = \frac{Q_{25}}{\sin\alpha_t} \qquad\qquad H_{2i} = Q_{20} - Q_{23}$$

$$H_{2e} = Q_{20} + Q_{23}$$

Cependant que, dans les deux cas

$$Q_{20} = 0{,}5\, \frac{b}{\cos\beta} + \xi_0 + h_S\, \frac{tg\gamma}{\cos\alpha}$$

$$Q_{21} = 0{,}5\, \frac{b}{\cos\beta} - \xi_0 - h_S\, \frac{tg\gamma}{\cos\alpha}$$

$$Q_{22} = \frac{\dfrac{h_s}{\cos\alpha} - \eta_0}{tg\gamma}$$

$$Q_{23} = \sqrt{R_s^2 - (R_s - \frac{h_s}{\cos\alpha})^2}$$

$$Q_{24} = (Q_{21} - Q_{22}) \cdot \sin\gamma$$

$$Q_{25} = Q_{20} \cdot \sin\gamma + ( \frac{h_s}{\cos\alpha} - \eta_0 ) \cos\gamma$$

$$\xi_0 = L_F \cdot tg\beta$$

$$\eta_0 = ( \frac{d - d_{fs}}{2} - L_F \cdot tg\alpha) \cos\alpha$$

$$L_F = 0{,}5 [(k + 1) \cdot \pi \cdot m - \frac{AW_k}{\cos\alpha} + z \cdot m \cdot inv\alpha_t - (d - d_f) tg\alpha]$$

$$h_S = 0{,}5 [d_b (tg\alpha_a - tg\alpha_t) \sin\alpha_t + d - d_f]$$

$tg\gamma = \sin\alpha \, tg\beta$

| | |
|---|---|
| Module (module normal) | m |
| Angle de pression | $\alpha$ |
| Angle de pression apparent | $\alpha_t$ |
| Nombre de dents | z |
| Angle d'inclinaison | $\beta$ |
| Diamètre du cercle de tête | $d_a$ |
| Diamètre du cercle de pied | $d_b$ |
| Largeur des dents | b |
| Diamètre du cercle de pied des meules | $d_{fS}$ |
| Diamètre du cercle primitif | d |
| Facteur de hauteur de la tête de dent dans le profil de référence au module 1 | $h_{aP}$ |
| Facteur de hauteur du pied de dent dans le profil référence au module 1 | $h_{fS}$ |
| Facteur de décalage du profil | x |
| Hauteur des dents de l'outil crémaillère de référence | $h_S$ |
| Un paramètre qui est fourni par la machine comme réaction est le Rayon du bord de la meule | $R_S$ |
| Course de génération | W |
| Largeur de tête | $L_F$ |
| Largeur de dent | $AW_k$ |

Fig. 1

Fig. 2

Fig. 3a

Fig. 3b

Fig. 4

Fig. 5

## Fig. 6

## Fig. 7

**Fig. 8**

**Fig. 9**

## Fig. 10

## Fig. 11

## Fig. 12